# EUROPEAN PATENT SPECIFICATION

(11) **EP 4 418 605 B1**
(45) Date of publication and mention of the grant of the patent: **16.04.2025**
(21) Application number: 23461518.5
(22) Date of filing: 17.02.2023
(51) Int. Cl.: H04L 9/08

(54) **POST-QUANTUM ENCRYPTION KEY DISTRIBUTION METHOD AND A DEVICE**
VERFAHREN UND VORRICHTUNGZUR SCHLÜSSELVERTEILUNG POST-QUANTUM
PROCEDE ET DISPOSITIF DE DISTRIBUTION DE CLE DE CHIFFREMENT POST-QUANTIQUE

(43) Date of publication of application: 21.08.2024
(73) Proprietor: Quantum Blockchains Sp. z o.o., 20-502 Lublin (PL)
(72) Inventor: LUNIEWSKI, Piotr, 20-502 Lublin (PL); OLEJNIK, Ryszard, 20-502 Lublin (PL); MISIASZEK-SCHREYNER, Marta, 20-502 Lublin (PL); SOPEK, Miroslaw, 20-502 Lublin (PL)
(74) Representative: Kancelaria Eupatent.pl Sp. z.o.o

(56) References cited:
- WO-A1-2020/260751
- US-A1- 2022 006 627
- PEDONE IGNAZIO ET AL: "Toward a Complete Software Stack to Integrate Quantum Key Distribution in a Cloud Environment", IEEE ACCESS, IEEE, USA, vol. 9, 3 August 2021 (2021-08-03), pages 115270 - 115291, XP011874607, DOI: 10.1109/ACCESS.2021.3102313
- CICCONETTI CLAUDIO ET AL: "QKD-Secure ETSI MEC", 2022 IEEE 15TH WORKSHOP ON LOW TEMPERATURE ELECTRONICS (WOLTE), IEEE, 6 June 2022 (2022-06-06), pages 1 - 4, XP034186108, DOI: 10.1109/WOLTE55422.2022.9882872
- TOSHIBA: "Draft - DGS/QKD-014KeyDeliv v0.0.3", vol. ISG QKD Quantum Key Distribution, no. .0.3, 1 December 2018 (2018-12-01), pages 1 - 21, XP014335091, Retrieved from the Internet <URL:docbox.etsi.org/ISG/QKD/05-CONTRIBUTIONS/2018/QKD(18)025018_Draft_-_DGS_QKD-014KeyDeliv__v0_0_3/QKD-014KeyDelivv003.pdf> [retrieved on 20181201]

## Description

### TECHNICAL FIELD

The present invention relates to the field of secure communication and cybersecurity, in particular to a method and a device that have increased security against a cryptanalytic attack by a quantum computer.

### BACKGROUND

The foundations of current cybersecurity solutions are challenged by forthcoming quantum computers. Quantum computers are expected to break, or at least weaken, the most important existing cryptographic protocols.

There are two general approaches to mitigate the risk of quantum computers breaching security of a communication system: quantum cryptography based on physical security and post-quantum cryptography based on improved algorithmic approach.

Quantum cryptography offers physical-level security. It uses quantum properties of light to transmit encryption keys and is based on the impossibility to measure the properties without inescapable change of the properties, so that any eavesdropping can be detected and further communication prevented. When the encryption keys are then used for one-time-pad (OTP) encryption, the entire scheme offers information-theoretic security which is a synonym to unconditional security. This led to development of a technology for quantum cryptography, called Quantum Key Distribution (QKD). There are several types of QKD devices already commercially available, albeit at a high cost and at highly complicated deployment scenarios requiring direct fiber optic or satellite communication. As a consequence, the development of a system based on quantum cryptography is slow and heavily relies on public funding, such as the European Quantum Communication Infrastructure (EuroQCI project).

Post-Quantum Cryptography (PQC) offers algorithmic-level security, in the same way as classical cryptography does. PQC algorithms are assumed to be secure against an attack by a quantum computer. These algorithms are based on different mathematical foundations, which in theory, should result in a stronger resistance to cryptoanalytical attacks. Among many, the most popular foundation is offered by the theory of multidimensional lattices to form what is known as lattice-based cryptography. Post-Quantum cryptography is now officially recommended by organizations like the US National Institute of Standards and Technology (NIST) as the best way to mitigate the risks caused by quantum computers. However, as there is no hard proof of PQC security and as some of the algorithms which were meant as additional candidates in NIST July 2022 recommendation were broken by modest computational resources, it is still unclear which kind of cryptography should be used for protection of critical infrastructure.

There are known software QKD emulators, such as the project called "Analysis and Online Simulation of Quantum Key Distribution" (https://www.qkdsimulator.com/). It does not offer compliance with the ETSI standards, but allows for understanding of quantum optical features of the QKD communication. Another project, called QKDNetSim (https://www.qkdnetsim.info/), offers simulation of QKD network under network simulator NS-3. The is also known a project developed at Politecnico di Torino, called QKD-SIM, which offers ability to work with simulated qubits - models for quantum bearers of information and operates according to ETSI 004 and ETSI 014 protocols.

### SUMMARY OF THE INVENITON

There is a need to provide an improved communication system that would require less specialized hardware for implementation, but at the same time provide increased security as compared to current standard communication systems.

The object of the invention is a device for communicating with another device of the same type via an emulated quantum channel, the device comprising: a central processing unit; a memory; a hardware quantum random number generator; a network interface for communicating via the emulated quantum channel; wherein the central processing unit is configured to provide quantum key distribution keys to the other device, by: generating, by means of the quantum random number generator, at least one QKD key; generating, by means of the quantum random number generator, a token; sending the token, via the network interface, to the other device; receiving, from the other device, an encrypted token; decrypting the encrypted token with the public key of the other device; comparing the decrypted token with the generated token; upon determining that the decrypted token corresponds to the generated token, encrypting the at least one QKD key with the public key of the other device and sending, via the network interface, the encrypted at least one QKD key to the other device.

The central processing unit can be further configured to receive quantum key distribution keys from the key providing device by: receiving, via the network interface, the token from the QKD providing device; encrypting the token with the private key of the device; sending, via the network interface, the encrypted token to the QKD providing device; receiving, via the network interface, at least one encrypted QKD key; decrypting the at least one encrypted QKD key with the private key of the device.

The device may further comprise a secure application entity (210A, 210B) configured to receive the at least one QKD key.

The device may further comprise an interface to a secure application entity of another device, the interface configured to communicate the at least one QKD key.

The network interface can be one of the following interfaces: Ethernet interface, fiber optics interface, cellular network interface.

The invention also relates to a communication system comprising a plurality of devices as described herein, wherein the devices are configured to communicate with each other based on quantum keys exchanged via the emulated quantum channel.

The present invention is based on the assumption that it is quantum cryptography that offers better protection, but to avoid high deployment costs and complications of building direct fiber optic or deploying satellite communication, it is possible to emulate QKD technology in hardware devices. The possibility of such emulation is guaranteed by the fact of QKD technology being well standardized on the interface level by European Telecommunications Standards Institute (ETSI) which developed standards that enable interoperability of the quantum communication networks, such as : ETSI GS QKD 004 V2.1.1 and ETSI GS QKD 014 V1.1.1, which define the interfaces the other elements of secure communication infrastructure can use for key exchange.

It is known as well in the art document PEDONE IGNAZIO ET AL: "Toward a Complete Software Stack to Integrate Quantum Key Distribution in a Cloud Environment",IEEE ACCESS, IEEE, USA, vol. 9, 3 August 2021 (2021-08-03), pages 115270-115291, XP011874607,

The solution according to the present invention offers compatibility with quantum cryptography solutions at the protocol level, but does not require high-cost fiber optic communication infrastructure, while ensuring the security level not less than that of post-quantum cryptography. The hardware used in the present invention comprises quantum random number generators and two physically independent networks: one for emulation of a quantum channel and another one for emulation of a classical channel of a QKD system.

The invention assumes that the Post-Quantum Cryptography can be implemented as a software in a CPU, or that the hardware can include fast dedicated FPGA processor to provide the post-quantum encryption.

The encryptor according to the present invention has a form of an independent electronic device that solves the problem of ensuring the exchange of cryptographic keys based on the protocols appropriate for QKD solutions, compliant with requirements of the aforementioned ETSI standards related to QKD. However, the encryptor does not need to communicate using quantum optical devices and special fiber optic connections. Therefore, the encryptor enables the construction of a security infrastructure of a high security based on the QKD model without the need to invest in typical QKD devices requiring optical communication infrastructure. Although the ensuing security level is below that offered by standard QKD devices, it is higher than the current non-quantum solutions, and can be as high as existing solutions based on post-quantum cryptography recommended by standardization organizations such as the National Institute of Standards and Technology (NIST).

The invention can accelerate the development of highly secured QKD networks at a much lower initial cost. Therefore, it paves the path to quantum cryptography adoption starting from existing infrastructure and facilitates faster and easier upgrade to real QKD networks in the future. The invention offers the ability to emulate QKD devices that represent high level of security in the area of data transfer. It does so in a way that is compatible with hardware of any QKD devices, as long as the devices use standard protocols as established by ETSI. What is more, without modifying the hardware parts of the invention, other standards (when available) can also be implemented. This allows the following benefits as compared to the prior art: lowering the cost of initial deployment of quantum cryptography, while providing data transfer security on the recommended level (by standards organizations like NIST) and while enabling its users to use it as a network encryptor or high-entropy random data source.

### BRIEF DESCRIPTION OF DRAWINGS

The present invention is shown by means of example embodiments on a drawing, wherein:
Fig. 1 shows a high-level architecture of the device according to an embodiment of the present invention;
Fig. 2 shows a typical model of communication between QKD system devices;
Fig. 3 shows a typical scenario of QKD keys distribution;
Fig. 4 shows functional modules of one embodiment of the device according to the invention;
Fig. 5 shows a procedure performed by the device according to the invention;
Fig. 6 shows functional modules of another embodiment of the device according to the invention.

### DETAILED DESCRIPTION

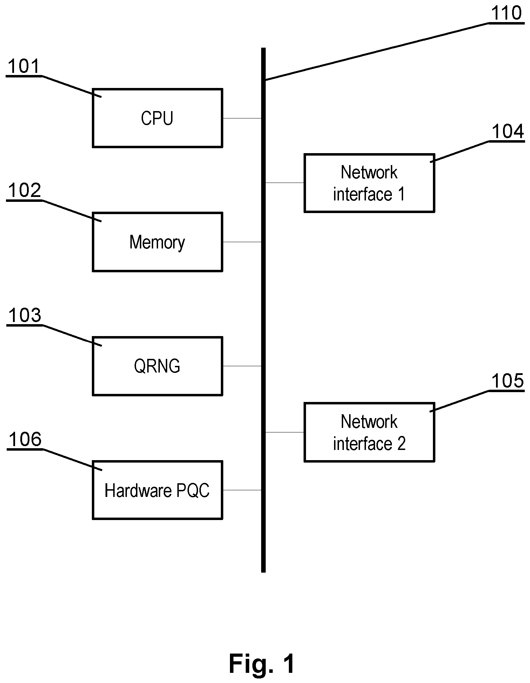

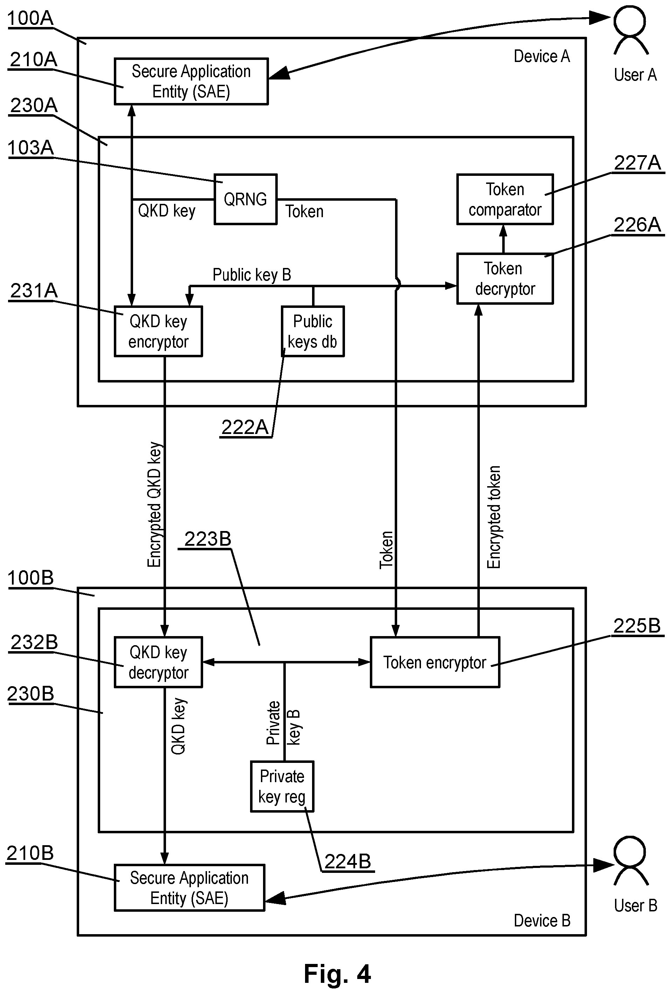

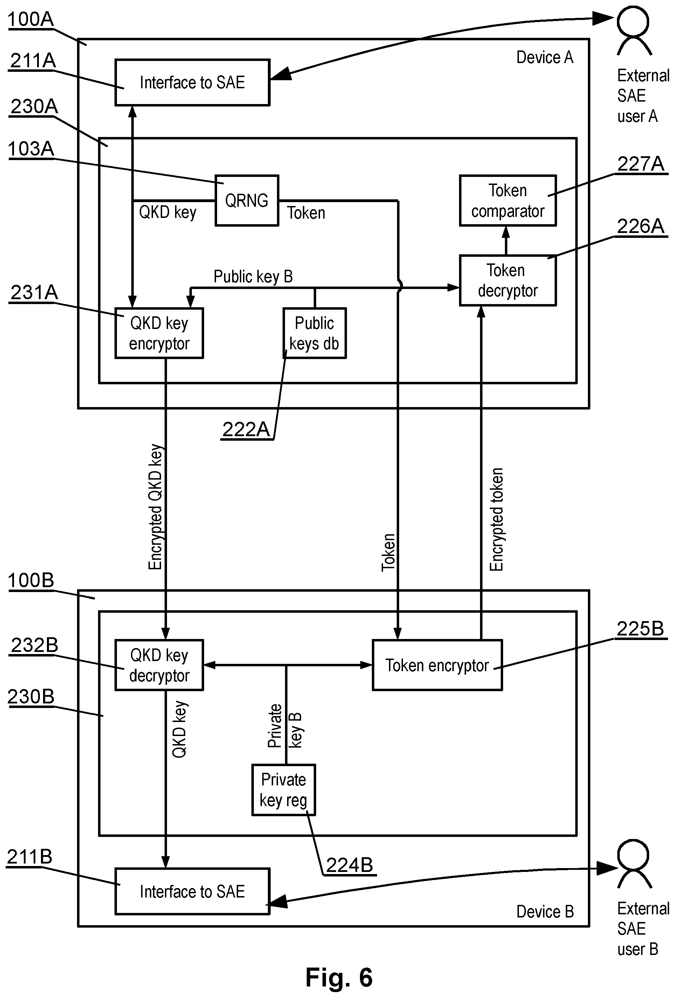

As shown in Fig. 1, the communication device 100 according to the invention comprises a central processing unit (CPU) 101, a memory 102, a quantum random number generator 103 and two parallel network interfaces 104, 105, which communicate with each other via one or more data buses 110 (for clarity, a single common data bus is shown, but the individual components may also communicate via dedicated data buses). The quantum random number generator (QRNG) 103 is a hardware module installed on the device board, in other words - embedded in the electronics of the device. Optionally, the communication device may further comprise a hardware post-quantum cryptography (PQC) module 106, preferably a field programmable gate array (FPGA) circuit, for handling PQC encryption and decryption functionality (for example, to be used in modules 226A, 231A, 232B, 225B as shown in Figs. 4 or 6).

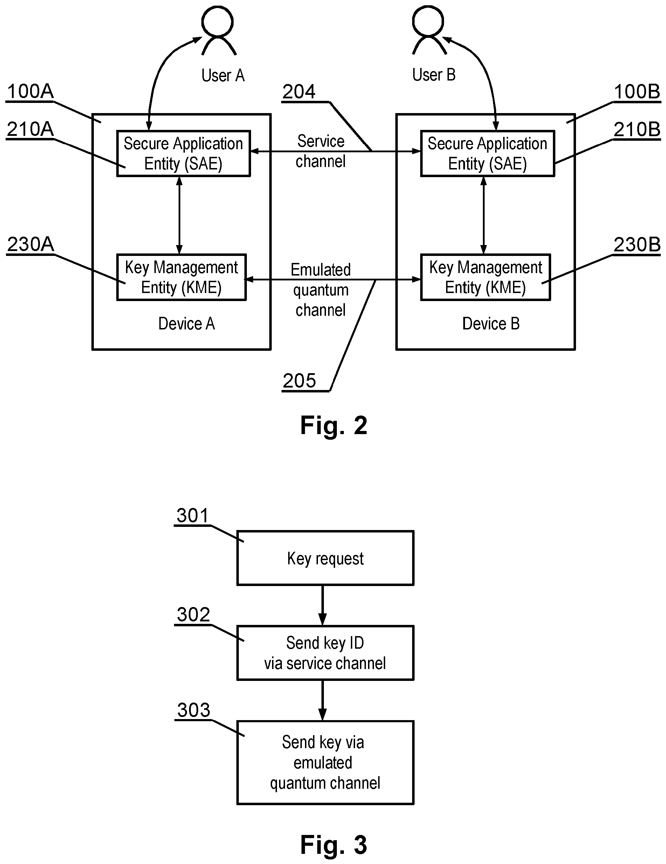

The device is controlled by the CPU 101 configured to operate according to processor-executable instructions (software) and data stored in the memory 102, to provide the functionality of modules described in details with reference to Fig. 2 or 3. In a specific embodiment, the CPU 101 can operate a generic Unix-type operating system, such as Linux or a specialized limited version stripped of all unnecessary functions other than emulation of ETSI interfaces, cryptographic functions and administrative functions.

The device 100 may operate in one of three modes, namely:
- in a QKD emulation mode as described with reference to Fig. 6
- as a stand-alone hardware-based quantum random numbers generator, which can be used for various cryptographic applications;
- as a device for encrypting the actual payload of messages sent between two devices of this type, as explained with reference to Fig. 4.

In general, in the QKD emulation mode, the device may operate in a QKD network architecture as defined by ETSI GS QKD 004 V2.1.1 or ETSI GS QKD 014 V1.1.1, which is shown for reference in Fig. 2. Two devices: 100A and 100B are configured to communicate with each other. Each device 100A, 100B has an interface to at least one Secure Application Entity (SAE) 210A, 210B, namely an application that needs to communicate in a secure manner with the SAE 210A, 210B of the other device 100A, 100B via a first network interface 104. The SAEs 210A, 210B may communicate using cryptographic algorithms based on secure keys generated and exchanged by means of Key Management Entity (KME) 230A, 230B via a second network interface 105.

The functionality of the modules will be explained based on an example scenario, wherein the SAE 210A connected to the first device 100A needs to communicate securely with the SAE 210B connected to the second device 100B. This procedure involves three steps, explained with reference to Fig. 3, in accordance with a scenario described in ETSI GS QKD 014 V1.1.1. In step 301, SAE 210A of the first device 100A calls a key delivery method "Get key" with the identifier of the SAE 210B to get keys from the KME 230A. The KME 230A delivers to the SAE 210A key materials with the associated key IDs that are to be shared with the KME 230B. The request can be for multiple keys and it can specify how long the returned keys shall be. In step 302, the SAE 210A notifies the SAE 210B of the key IDs, via a first channel 204, called a service channel, and handled by the first network interfaces 104 of each device 100A, 100B. Depending on the choice of the actual ETSI standard the request can be sent as a typical stateful TCP request (in ETSI 004), or as HTTPS request (in ETSI 014). In step 303, the SAE 210B calls the key delivery method "Get key with key IDs" with the SAE 210A identifier and the notified key IDs information to get the identical keys from the KME 230B, and KME 230B delivers to SAE 210B the identical key materials with the identical associated key IDs that are shared with KME 230A, wherein the key materials are communicated between KME 230A and KME 230B via a second channel, herein called an emulated quantum channel, and handled by the second network interface 105 of each device 100A, 100B.

The functional modules of one embodiment of the device that enable its operation in the QKD emulation mode are shown in Fig. 4. These modules can be implemented as software stored in memory 102, operable by the CPU 101. In Fig. 4, there is a first device 100A configured to request secure communication and a second device 100B configured to respond to the request. Both devices 100A, 100B may have implemented the same modules and configured to initiate a requester/responder modules according to the function they need to perform.

In this mode, the KMEs 230A, 230B of the devices 100A, 100B communicate with each other via the second channel, while the SAEs 210A, 210B communicate with each other via the first channel. For example, both channels can be of a standard Ethernet type. However, in specific embodiments, the second channel used to emulate the QKD quantum channel can be of a different type, for example a fiber optics connection or a cellular network interface, such as a one realized via a GSM SIM card.

The security of the data communication via the second network interface 105, which does not have to be an optic fiber interface as in standard QKD systems, is provided by the sub-modules of the KMEs 230A, 230B shown in details in Fig. 4. In Fig. 4, for the first device 100A there are shown modules used for the process of generating the keys, while for the second device 100B there are shown modules used for the process of receiving the keys. It is to be noted that each device may contain both types of modules in order to function as both provider and recipient of the secure keys.

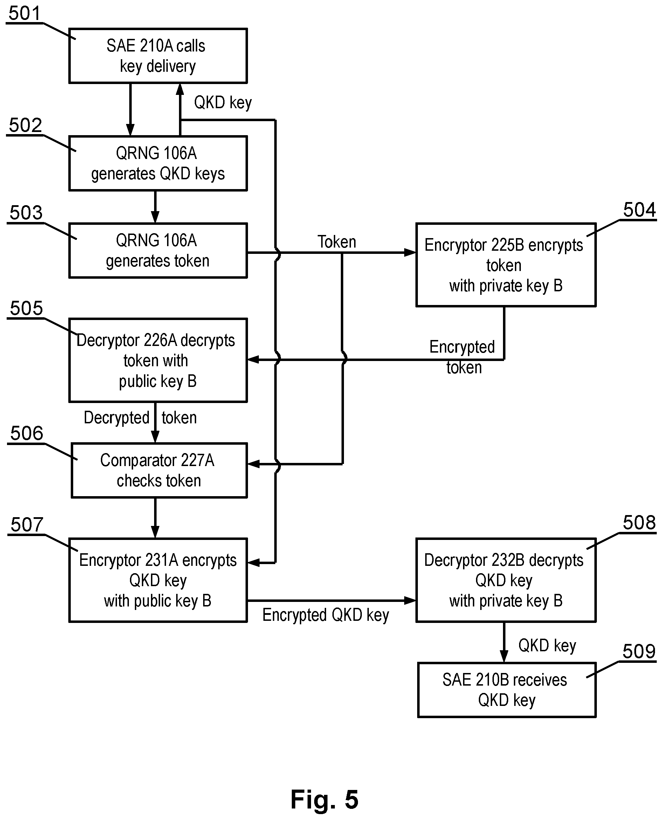

The example scenario and operation of individual modules of Fig. 4 is shown with reference to Fig. 5. First, in step 501 the SAE 210A at the first device 100A calls for delivery of one or more QKD keys. The keys are generated in step 502 by the quantum random number generator 103A and sent back to SAE 210A, as well as to the encryptor 231A. In step 503 the quantum random number generator 103A of the first device 100A generates a token, i.e. a random number used for additional security protection. The token is sent to the second device 100B, wherein in step 504 it is encrypted by a token encryptor 225B with the private key of device B (stored in a private key register 224B) and sent back in the encrypted form to the first device 100A, wherein in step 505 it is decrypted by a token decryptor 226A with the public key of device B (as known from a database of public keys 222A stored at the first device 100A). In step 506 a token comparator checks the original token (generated in step 503) and the decrypted token for identity. If the tokens are identical, this means that the second device 100B is a trusted device according to the private-public key pair for that device and can be trusted for the purpose of further communication by the first device 100A. Therefore, in step 507 the first device 100A, using a QKD key encryptor 231A, encrypts the QKD key with the public key of the second device 100B and sends the encrypted QKD key to the second device 100B, wherein in step 508 it is decrypted by a QKD decryptor 232B with the private key of the second device 100B. The decrypted QKD key can then be sent in step 509 to the SAE 210B at the second device 100B for further use.

All communication between the first device 100A and the second device 100B between steps 503-504, 504-505, 507-508 is effected via the emulated quantum channel 205.

After the QKD keys are used by the SAEs, they shall be permanently discarded from the memory of the devices.

For example, the QKD key(s) can be used to encrypt the payload to be transferred between the SAEs of two units over the service channel. The encryption algorithm can be the OTP (One-Time-Pad) or AES (Advanced Encryption Standard). While the OTP algorithm is theoretically unbreakable, the resulting bandwidth may be low, as it requires keys of the same length as the message payload. The safe choice is to use the AES algorithm with long keys (for example, much longer then 256), because the AES algorithm has been shown to offer security even against the attack of quantum computer.

In particular, the secure exchange of QKD keys allows both devices 100A, 100B to communicate securely using standard communication protocols such as a virtual private network (VPN).

Apart from use as a secure communication device, the device can be used to provide entropy generation services without any network connection to the second device od the pair. It can be possible through the implementation of additional, specific interface which is of REST Web API type call. This interface can be reached via the network interface that emulates the service channel and can deliver random numbers with high speed and in various formats.

A second embodiment of the devices is shown in Fig. 6. In the first embodiment presented in Fig. 4, both devices 100A, 100B contained SAEs 210A, 210B. The second embodiment of Fig. 6 differs in that the devices 100A, 100B do not contain the SAEs, but instead an interface 211A, 211B to SAEs implemented in other devices, wherein the interfaces 211A, 211B are used to transmit the QKD keys securely exchanged by the KMEs 230A, 230B. In that case, the devices 100A, 100B do not need to include the first network interface 104 for handling the first channel 204, as this channel can be handled by the other devices that implement the functionality of the SAEs.

Examples of practical applications of the devices according to the invention are discussed below.

### 1) A model for QKD devices.

Using the devices according to the invention one can obtain a device that exhibits features of the real QKD devices. The external interfaces of the model are compliant with the interfaces of the QKD devices. This allows any organization which plans QKD deployment to start the integration work using the devices according to the invention, to prepare all the elements of their infrastructure and to acquire the real QKD only when the organization is ready for it, both technically and financially.

### 2) A key exchange facility for existing networks

This embodiment relies on the highly secured key exchange mechanism which is based on post-quantum key exchange algorithms. As such it can be used for all network security applications, which can work with symmetric keys. The list of applications include systems like Virtual Private Networks (VPN), shared-key Secured Socket Layer (SSL) or end-to-end encryption devices. An important feature of this embodiment is the use of algorithms that are approved by organizations such as NIST for the key exchange. Also, the presence of a hardware QRNG in the device according to the invention in important, as it allows for high entropy keys to be generated.

### 3) A network encryptor based on ETSI QKD protocols

This embodiment relies on both post-quantum key exchange algorithms, QRNG and out-of-band key exchange as integral part of the device. An important feature is also the possibility of integrating the network transfer security in the encryptor mode. The device can encrypt the network traffic on the level of wired Ethernet protocol, or when the other types of network interfaces are used, also on the optical level. In this embodiment the invention leads to integrated products that deliver network security on the level of currently recommended post-quantum algorithms, while it does not require expensive point-to-point fiber optics connections.

### 4) Network-attached source of entropy

This embodiment relies on the hardware QRNG which is a part of the device and on set of interfaces that allow any other computer on the network to issue a request for blocks or streams of absolutely random bits generated by the QRNG module. In addition to pure random data, the device can issue the certificates which confirm the origin of the entropy. This embodiment allows the device to deliver the entropy in parallel to its other uses, making it true universal quantum entropy source.

## Claims

1. A device for communicating with another device of the same type via an emulated quantum channel (205), the device comprising:
- a central processing unit (101);
- a memory (102);
- a hardware quantum random number generator (103);
- a network interface (105) for communicating via the emulated quantum channel (205);
- wherein the central processing unit (101) is configured to provide (100A) quantum key distribution (QKD) keys to the other device, by:
- generating (502), by means of the quantum random number generator (103), at least one QKD key;
- generating (503), by means of the quantum random number generator (103), a token;
- sending the token, via the network interface (105), to the other device;
- receiving, from the other device, an encrypted token;
- decrypting (505) the encrypted token with the public key of the other device;
- comparing (506) the decrypted token with the generated token;
- upon determining that the decrypted token corresponds to the generated token, encrypting (507) the at least one QKD key with the public key of the other device and sending, via the network interface (105), the encrypted at least one QKD key to the other device.

2. The device according to claim 1, wherein the central processing unit (101) is further configured to receive (100B) quantum key distribution (QKD) keys from the key providing device by:
- receiving, via the network interface (105), the token from the QKD providing device (100A);
- encrypting (504) the token with the private key of the device;
- sending, via the network interface (105), the encrypted token to the QKD providing device (100A);
- receiving, via the network interface (105), at least one encrypted QKD key;
- decrypting the at least one encrypted QKD key with the private key of the device.

3. The device according to any of previous claims, further comprising a secure application entity (210A, 210B) configured to receive the at least one QKD key.

4. The device according to any of previous claims, further comprising an interface (211A, 211B) to a secure application entity of another device, the interface configured to communicate the at least one QKD key.

5. The device according to any of previous claims, wherein the network interface (105) is one of the following interfaces: Ethernet interface, fiber optics interface, cellular network interface.

6. A communication system comprising a plurality of devices according to any of previous claims, wherein the devices are configured to communicate with each other based on quantum keys exchanged via the emulated quantum channel.

## Patentansprüche

1. Vorrichtung zum Kommunizieren mit einer anderen Vorrichtung des gleichen Typs über einen emulierten Quantenkanal (205), wobei die Vorrichtung Folgendes umfasst:
- eine zentrale Verarbeitungseinheit (101);
- einen Speicher (102);
- einen Hardware-Quantenzufallszahlengenerator (103);
- eine Netzwerkschnittstelle (105) zum Kommunizieren über den emulierten Quantenkanal (205);
- wobei die zentrale Verarbeitungseinheit (101) konfiguriert ist, um (100A) Quantenschlüsselverteilungs(QKD-)Schlüssel für die andere Vorrichtung bereitzustellen, durch:
- Erzeugen (502), mittels des Quantenzufallszahlengenerators (103), von zumindest einem QKD-Schlüssel;
- Erzeugen (503), mittels des Quantenzufallszahlengenerators (103), eines Tokens;
- Senden des Tokens, über die Netzwerkschnittstelle (105), an die andere Vorrichtung;
- Empfangen, von der anderen Vorrichtung, eines verschlüsselten Tokens;
- Entschlüsseln (505) des verschlüsselten Tokens mit dem öffentlichen Schlüssel der anderen Vorrichtung;
- Vergleichen (506) des entschlüsselten Tokens mit dem erzeugten Token;
- beim Bestimmen, dass der entschlüsselte Token dem erzeugten Token entspricht, Verschlüsseln (507) des zumindest einen QKD-Schlüssels mit dem öffentlichen Schlüssel der anderen Vorrichtung und Senden, über die Netzwerkschnittstelle (105), des verschlüsselten zumindest einen QKD-Schlüssels an die andere Vorrichtung.

2. Vorrichtung nach Anspruch 1, wobei die zentrale Verarbeitungseinheit (101) ferner konfiguriert ist, um (100B) Quantenschlüsselverteilungs(QKD-)Schlüssel von der Schlüsselbereitstellungsvorrichtung zu empfangen, durch:
- Empfangen, über die Netzwerkschnittstelle (105), des Tokens von der QKD-Bereitstellungsvorrichtung (100A);
- Verschlüsseln (504) des Tokens mit dem privaten Schlüssel der Vorrichtung;
- Senden, über die Netzwerkschnittstelle (105), des verschlüsselten Tokens an die QKD-Bereitstellungsvorrichtung (100A);
- Empfangen, über die Netzwerkschnittstelle (105), von zumindest einem verschlüsselten QKD-Schlüssel;
- Entschlüsseln des zumindest einen verschlüsselten QKD-Schlüssels mit dem privaten Schlüssel der Vorrichtung.

3. Vorrichtung nach einem der vorhergehenden Ansprüche, ferner umfassend eine sichere Anwendungsentität (210A, 210B), die konfiguriert ist, um den zumindest einen QKD-Schlüssel zu empfangen.

4. Vorrichtung nach einem der vorhergehenden Ansprüche, ferner umfassend eine Schnittstelle (211A, 211B) zu einer sicheren Anwendungsentität einer anderen Vorrichtung, wobei die Schnittstelle konfiguriert ist, um den zumindest einen QKD-Schlüssel zu kommunizieren.

5. Vorrichtung nach einem der vorhergehenden Ansprüche, wobei die Netzwerkschnittstelle (105) eine der folgenden Schnittstellen ist: Ethernet-Schnittstelle, Glasfaserschnittstelle, Mobilfunkschnittstelle.

6. Kommunikationssystem, das eine Vielzahl von Vorrichtungen nach einem der vorhergehenden Ansprüche umfasst, wobei die Vorrichtungen konfiguriert sind, um basierend auf Quantenschlüsseln, die über den emulierten Quantenkanal ausgetauscht werden, miteinander zu kommunizieren.

## Revendications

1. Dispositif destiné à communiquer avec un autre dispositif du même type par l'intermédiaire d'un canal quantique émulé (205), le dispositif comprenant :
- une unité centrale de traitement (101) ;
- une mémoire (102) ;
- un générateur de nombres aléatoires matériel quantique (103) ;
- une interface réseau (105) destinée à communiquer par l'intermédiaire du canal quantique émulé (205) ;
- ladite unité centrale de traitement (101) étant configurée pour fournir (100A) des clés de distribution de clés quantiques (QKD) à l'autre dispositif, par :
- la génération (502), au moyen du générateur de nombres aléatoires quantique (103), d'au moins une clé QKD ;
- la génération (503), au moyen du générateur de nombres aléatoires quantique (103), d'un jeton ;
- l'envoi du jeton, par l'intermédiaire de l'interface réseau (105), à l'autre dispositif ;
- la réception, en provenance de l'autre dispositif, d'un jeton chiffré ;
- le déchiffrement (505) du jeton chiffré avec la clé publique de l'autre dispositif ;
- la comparaison (506) du jeton déchiffré avec le jeton généré ;
- lors de la détermination que le jeton déchiffré correspond au jeton généré, le chiffrement (507) de l'au moins une clé QKD avec la clé publique de l'autre dispositif et l'envoi, par l'intermédiaire de l'interface réseau (105), de l'au moins une clé QKD chiffrée à l'autre dispositif.

2. Dispositif selon la revendication 1, ladite unité centrale de traitement (101) étant en outre configurée pour recevoir (100B) des clés de distribution de clés quantiques (QKD) en provenance du dispositif de fourniture de clés par:
- la réception, par l'intermédiaire de l'interface réseau (105), du jeton provenant du dispositif fournisseur de QKD (100A) ;
- le chiffrement (504) du jeton avec la clé privée du dispositif ;
- l'envoi, par l'intermédiaire de l'interface réseau (105), du jeton chiffré au dispositif fournisseur de QKD (100A) ;
- la réception, par l'intermédiaire de l'interface réseau (105), d'au moins une clé QKD chiffrée ;
- le déchiffrement de l'au moins une clé QKD chiffrée avec la clé privée du dispositif.

3. Dispositif selon l'une quelconque des revendications précédentes, comprenant en outre une entité d'application sécurisée (210A, 210B) conçue pour recevoir la au moins une clé QKD.

4. Dispositif selon l'une quelconque des revendications précédentes, comprenant en outre une interface (211A, 211B) pour une entité d'application sécurisée d'un autre dispositif, l'interface étant conçue pour communiquer l'au moins une clé QKD.

5. Dispositif selon l'une quelconque des revendications précédentes, ladite interface réseau (105) étant l'une des interfaces suivantes : interface Ethernet, interface à fibre optique, interface réseau cellulaire.

6. Système de communication comprenant une pluralité de dispositifs selon l'une quelconque des revendications précédentes, lesdits dispositifs étant configurés pour communiquer les uns avec les autres sur la base de clés quantiques échangées par l'intermédiaire du canal quantique émulé.
